# EUROPEAN PATENT SPECIFICATION

(11) **EP 3 515 638 B1**
(45) Date of publication and mention of the grant of the patent: **22.09.2021**
(21) Application number: 17864918.2
(22) Date of filing: 09.10.2017
(51) Int. Cl.: B22F 7/06, B21C 37/02, B22F 5/00, B22F 7/02, B44C 3/02, B21J 1/00

(54) **METHOD OF MAKING A PATTERNED COMPOSITE METAL PLATE**
VERFAHREN ZUR HERSTELLUNG EINER GEMUSTERTEN VERBUNDMETALLPLATTE
PROCÉDÉ DE FABRICATION D'UNE PLAQUE MÉTALLIQUE COMPOSITE À MOTIFS

(30) Priority: 27.10.2016 SE 1651408
(43) Date of publication of application: 31.07.2019
(73) Proprietor: Damasteel AB, 815 76 Söderfors (SE)
(72) Inventor: JARBELIUS, Per, 802 67 Gävle (SE)
(74) Representative: Noréns Patentbyrå AB
(86) International application number: PCT/SE2017/050980
(87) International publication number: WO 2018/080374

(56) References cited:
- WO-A1-95/19861
- WO-A1-2005/110660
- DE-A1-102009 010 149
- GB-A- 2 055 901
- JP-A- H06 192 704
- JP-A- 2006 102 762
- JP-A- 2012 192 163
- US-A- 5 185 044
- US-A1- 2003 119 599
- US-A1- 2010 227 193
- US-A1- 2012 107 561
- US-A1- 2013 058 824

## Description

### TECHNICAL FIELD

The invention relates to a method of making a patterned composite metal plate. In particular, the invention relates to a method of producing a composite plate, which can be used for the manufacture of decorative metal objects.

### BACKGROUND OF THE INVENTION

Decorative metal manufacturing techniques have been known for hundreds of years for making mixed metal laminates having distinct layered patterns. Forge welding was used in Syria to produce hard and flexible Damascus steel for the blades of swords and knives. In Japan a similar technique called Mokume Gane was used for the same purpose. The objects obtained in this way are referred to have a damascened pattern.

Nowadays, damascene patterned metal objects are produced in many different ways for a large number of material combinations. WO2015076771, WO2010118820 and US4399611 disclose different lamination techniques for obtaining the desired decorative pattern.

US20100227193 and US3171195 disclose extrusion methods, wherein one metal may be provided in the form of a powder.

WO9519861 discloses the making of stainless composite metal products having a damascene pattern, including the step of 1) providing a capsule comprising at least two stainless steel powders arranged in parallel elongated layers, 2) hot isostatic pressing the capsule for forming a blank, 3) forging and hot rolling the blank to an intermediate dimension, 4) distorting the elongated structure by mechanical working and thereafter 5) hot working the blank to the final dimension. To be specific, WO9519861 discloses in Example 3 hot rolling to a bar diameter of 18 mm and thereafter twisting the bar 40 turns/m around its own axis and flat rolling for obtaining the damascene pattern in the final product.

All the above techniques result in damascene patterned objects having a relatively small size. The use has therefore been restricted to small sized objects such as knives, weapons, golf club heads, rings and other jewellery.

### SUMMARY OF THE INVENTION

The general object of the present invention is to provide an improved method for making patterned composite metal plate from powders.

Another object is to provide a method for making large size plates, which can be used to produce large size objects having a decorative pattern, in particular of the damascene type.

These objects are achieved by the means of the invention as defined in the independent claims.

Further advantageous embodiments of the invention have been specified in the dependent claims.

The present invention overcomes the drawbacks of the limited size of the composite material obtainable with the method known from WO9519861, by filling the powder container such that the step of distorting the elongated structure by mechanical working such as twisting needs not be performed, because the container is filled in a way such that the pattern will form during the normal hot deformation.

### BRIEF DESCRIPTION OF THE FIGURES

In the following, the invention will be described in more detail with reference to the preferred embodiments and the appended drawing.

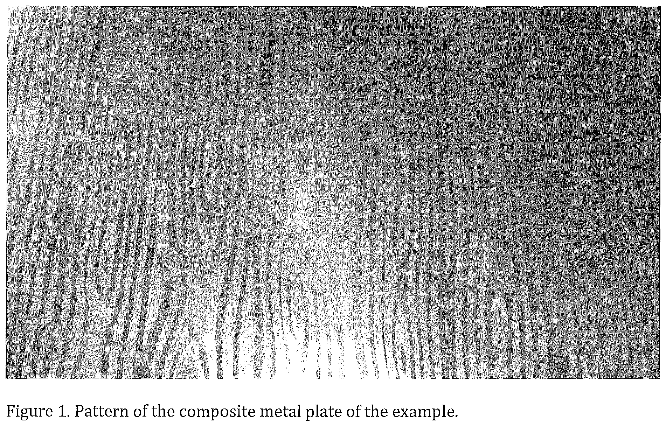

Fig. 1 discloses the pattern of a plate produced by the present method.

### DETAILED DESCRIPTION OF THE INVENTION

The claimed method of producing a patterned composite metal plate comprising the steps of:
a) providing at least two different metal and/or metal alloy powders,
b) filling a container,
   b1) with the powders in different individual layers, wherein the individual power layers include at least two non parallel layers and/or non straight layers, or
   b2) making a three dimensional non-solid body of one of the powders, which comprises least two non parallel parts of layers and/or non straight parts or layers, inserting said body in the container and filling cavities in and around the said body with the other powder,
c) sealing and evacuating the container,
d) subjecting the container to hot isostatic pressing in order to form a consolidated body comprising non parallel and/or non straight metal and/or metal alloy layers,
e) optionally subjecting the consolidated body to hot deformation in order to form an intermediate body having a thickness of 50 to 200 mm,
f) hot rolling the consolidated or the intermediate body in two perpendicular directions in order to form a plate,
   optionally
g) cold rolling the hot rolled plate in order to form a cold rolled plate
h) slitting the plate in two or more parts and
i) etching the plate in order to reveal or enhance the pattern.

The method involves the use of at least two different metal and/or metal alloy powders. Accordingly, if the powders are carefully produced it is possible to manufacture a plate having a high cleanliness and a small size of any hard phases present. The Equivalent Circle Diameter (ECD) of at least 95 vol. % of any oxide particles may be ≤ 10 µm and the ECD of at least 95 vol. % of any carbide and/or carbonitride particles may be ≤ 5 µm, wherein the ECD =2√A/π, where A is the surface of the particles in the studied section.

The claimed method can be applied to any metal or metal alloys that can be consolidated by Hot Isostatic Pressing (HIP). In particular the metal and/or metal alloy powders may comprise one or more of the following metals: Ag, Al, Au, Be, Bi, Cu, Ce, Cr, Fe, Mo, Nb, Ni, Pb, Pd, Pt, Sn, Ta, Ti, V, W and Zn. For many applications stainless steel powders are the best choice. The stainless steel powders comprise at least 11 %Cr, preferably at least 13 %Cr.

The method of filling the container is a key feature or the present invention, because the container is filled in a way such that the pattern will form during the normal hot deformation. Accordingly, the conventional step of size reduction and distortion of the elongated structure need not be performed.

One way of filling the container is to use two different metal and/or metal alloy powders and filling the container with the powders in separate individual layers, wherein the individual power layers include at least two non parallel layers and/or non straight layers. This can be done by placing a vertically movable powder-filling tool inside the stationary container, moving different individual filling sections of the powder-filling tool, which are connected to the respective powder source, independently of each other. Alternately, the feed of powder to one or more of the individual filling sections may be stopped for a certain time. These measures allow the individual power layers from the neighbouring section to flow also in the horizontal direction and form non parallel layers and/or non straight layers. In this way the ground for the desired pattern is formed already in the container.

Another way of forming the ground for the desired pattern is to make a three dimensional non-solid body of one of the powders, thereby inserting the body in the container and filling the container completely with the other powder. The body can be manufactured by a technique known as 3D-printing or Additive Manufacturing. Again the body must comprise at least two non parallel parts or layers and/or non straight parts or layers. The only restriction to the geometry of the body is that it must allow the complete filling of the container with the other powder.

The hot rolling in two perpendicular directions results in a product, that can have a substantial width. The width can be influenced by the size of the HIPed container and the rolling parameters. However, for practical reasons the size of the hot rolled plate may be in the range of 0.6 m x 1.5 m to 1.0 m x 3 m. The thickness (t) of the hot rolled plate may be 1-15mm. The upper limit may be 12, 10, 8 or 6 mm and the lower limit may be 2, 3 or 4 mm. The width (w) of the plate is at least 190 mm, the smallest width may be set to 210 mm, 250 mm, 300 mm, 400 mm, 500 mm 600 mm or 700 mm. The length (1) of the plate is larger the width (w) of the plate. The length depends on the size of the container used for HIPing and can e.g. be adjusted to 1 m, 1.5 m, 2 m, 2.5 m, 3 m, 3.5 m or even more.

The hot rolled plate may be subjected to cold rolling in order to produce a cold rolled plate, which may have a thickness in the range of 0.1-3 mm, preferably 0.2 - 2 mm, more preferably 0.5-1.5mm. The width of the cold rolled plate may be adjusted by slitting the plate. The hot rolled plate may also be subjected to slitting and/or cutting in order to obtain the desired width and length.

The invention is defined in the claims.

### EXAMPLE

A patterned composite metal plate was produced from the two austenitic stainless steel powders 316L and 304L. The powders were filled in two supply units, wherein each unit was connected to different individual parts of a vertically movable powder-filling tool: The filling tool was placed inside a container having a diameter of 250 mm, which remained stationary during the powder filling.

During the powder filling, different individual filling sections of the powder-filling tool were moved upwards independent of each other in a way such that ground for the desired pattern was formed inside the container, because the individual power layers could flow also in the horizontal direction during the filling and thereby form non parallel and non straight layers of the powders supplied. Thereafter the container was sealed and evacuated and processed according to standard HIP practice 1150 °C, 1000 bar, 1h.

The consolidated body was forged to a block having a thickness of 100 mm, a width of 300 mm and a length of 1m and then it was subjected to conventional hot rolling including a step of producing a slab having a thickness of 41 mm, a length of 960 mm and a width of 260 mm. Subjecting said slab to conventional hot rolling in two perpendicular directions in order to produce a plate having a thickness of about 2.74 mm, a length of 3 m and a width of 900 mm.

A sample was cut out of the plate and was subjected to polishing and etching in order to further enhance the pattern. The result is disclosed in Figure 1.

## Claims

1. A method of producing a patterned composite metal plate comprising the steps of:
a) providing at least two different metal and/or metal alloy powders,
b) filling a container,
b1) with the powders in different individual layers, wherein the individual power layers include at least two non parallel layers and/or non straight layers, or
b2) making a three dimensional non-solid body of one of the powders, which comprises least two non parallel parts or layers and/or non straight parts or layers, inserting said body in the container and filling the cavities in and around the said body completely with the other powder,
c) sealing and evacuating the container,
d) subjecting the container to hot isostatic pressing in order to form a consolidated body comprising non parallel and/or non straight metal and/or metal alloy layers,
e) optionally subjecting the consolidated body to hot deformation in order to form an intermediate body having a thickness of 50 to 200 mm,
f) hot rolling the consolidated or the intermediate body in two perpendicular directions in order to form a plate,
optionally one or more of the steps of
g) cold rolling the hot rolled plate in order to form a cold rolled plate
h) slitting the plate in two or more parts and
i) etching the plate in order to reveal or enhance the pattern.

2. A method according to claim 1, wherein the pattern is a damascene pattern.

3. A method according to claim 1 or 2, wherein thickness, t, width, w, and length, l, of the plate fulfil at least one of the requirements t=1-15 mm, w ≥ 50 mm and 1 ≥ w.

4. A method according to any of the preceding claims, wherein the metal and/or metal alloy powders comprise one or more of the following metals: Ag, Al, Au, Be, Bi, Cu, Ce, Cr, Fe, Mo, Nb, Ni, Pb, Pd, Pt, Sn, Ta, Ti, V, W and Zn.

5. A method according to any of the preceding claims, wherein the powders are stainless steel powders, each comprising at least 11 % Cr, preferably at least 13 % Cr.

6. A method according to any of claims 1 and 2, wherein the plate is slitted in two or more parts in order to from strips, optionally comprising one or more of the steps of: cutting the strips into blanks, using the blanks to form at least one knife and etching the knife.

7. A patterned composite metal plate obtained by the method of any of claims 1-5, wherein the plate comprises at least two different metals and/or metal alloys, wherein thickness, t, width, w, and length, l, of the plate fulfil the requirements t=0.1-15 mm, w≥ 190 mm and 1 ≥ w, wherein the Equivalent Circle Diameter, ECD, of at least 95 vol. % of any oxide particles is ≤ 10 µm and wherein the ECD =2√A/π, where A is the surface of the particles in the studied section.

8. A patterned composite metal plate according to claim 7, fulfilling at least one of the following requirements:
| | |
|---|---|
| t : | 0.2-6 mm |
| w: | 30-100 cm |
| l: | 50-300 cm |

9. A patterned composite metal plate according to claims 7 or 8, wherein the pattern is a damascene pattern.

10. A patterned composite metal according to any of claims 7 to 9, wherein the at least two different metals and/or metal alloys comprise one or more of the following metals: Ag, Al, Au, Cu, Cr, Fe, Mo, Nb, Ni, Pb, Pd, Pt, Sn, Ta, Ti, V, W and Zn.

11. A patterned composite metal plate according to any of the claims 7-10, wherein the at least two different metals and/or metal alloys are stainless steels, each comprising at least 11 %Cr, preferably at least 13 %Cr, and optionally, wherein the Equivalent Circle Diameter, ECD, of at least 95 vol. % of any carbide and/or carbonitride particles is ≤ 5 µm, wherein the ECD =2√A/π, where A is the surface of the particles in the studied section.

## Patentansprüche

1. Verfahren zur Herstellung einer gemusterten Verbundmetallplatte, welches die folgenden Schritte umfasst:
a) Bereitstellen von mindestens zwei verschiedenen Metall- und/oder Metalllegierungspulvern,
b) Befüllen eines Behälters,
b1) mit den Pulvern in verschiedenen einzelnen Schichten, wobei die einzelnen
Leistungsschichten mindestens zwei nicht parallele Schichten und/oder nicht gerade Schichten enthalten, oder
b2) Herstellen eines dreidimensionalen, nicht festen Körpers aus einem der Pulver, welcher mindestens zwei nicht parallele Teile oder Schichten und/oder nicht gerade Teile oder Schichten umfasst, Einsetzen des besagten Körpers in den Behälter und Füllen der Hohlräume in und um den besagten Körper mit dem anderen Pulver,
c) Verschließen und Evakuieren des Behälters,
d) Unterziehen des Behälters einem heißisostatischen Pressen, um einen verfestigten Körper zu bilden, der nicht parallele und/oder nicht gerade Metall- und/oder Metalllegierungsschichten umfasst,
e) optionales Unterziehen des verfestigten Körpers einer Warmverformung, um einen Zwischenkörper mit einer Dicke von 50 bis 200 mm zu bilden,
f) Warmwalzen des verfestigten Körpers oder des Zwischenkörpers in zwei senkrechten Richtungen, um eine Platte zu bilden,
optional einen oder mehrere der folgenden Schritte
g) Kaltwalzen der warmgewalzten Platte, um eine kaltgewalzte Platte zu bilden
h) Schneiden der Platte in zwei oder mehr Teile, und
i) Ätzen der Platte, um das Muster sichtbar zu machen oder zu verstärken.

2. Verfahren nach Anspruch 1, wobei das Muster ein Damaszenermuster ist.

3. Verfahren nach Anspruch 1 oder 2, wobei die Dicke, t, die Breite, w, und die Länge, I, der Platte mindestens eine der Bedingungen t=1-15 mm, w ≥ 50 mm und I ≥ w erfüllen.

4. Verfahren nach einem der vorhergehenden Ansprüche, wobei die Metall- und/oder Metalllegierungspulver eines oder mehrere der folgenden Metalle umfassen: Ag, Al, Au, Be, Bi, Cu, Ce, Cr, Fe, Mo, Nb, Ni, Pb, Pd, Pt, Sn, Ta, Ti, V, Wund Zn.

5. Verfahren nach einem der vorhergehenden Ansprüche, wobei die Pulver rostfreie Stahlpulver sind, die jeweils mindestens 11 % Cr, vorzugsweise mindestens 13 % Cr umfassen.

6. Verfahren nach einem der Ansprüche 1 und 2, wobei die Platte in zwei oder mehr Teile geschnitten wird, um Streifen zu erhalten, optional umfassend einen oder mehrere der folgenden Schritte: Schneiden der Streifen in Rohlinge, Verwenden der Rohlinge zur Bildung mindestens eines Messers und Ätzen des Messers.

7. Gemusterte Verbundmetallplatte, erhalten durch das Verfahren nach einem der Ansprüche 1-5, wobei die Platte mindestens zwei verschiedene Metalle und/oder Metalllegierungen umfasst, wobei die Dicke, t, die Breite, w, und die Länge, I, der Platte die Bedingungen t=0,1-15 mm, w≥ 190 mm und 1 ≥ w erfüllen, wobei der äquivalente Kreisdurchmesser, ECD, von mindestens 95 Vol.% jeglicher Oxidpartikeln ≤ 10 µm ist, und wobei der ECD =2√A/π ist, wobei A die Oberfläche der Teilchen in dem untersuchten Abschnitt ist.

8. Gemusterte Verbundmetallplatte nach Anspruch 7, welche mindestens eine der folgenden Bedingungen erfüllt:
| | |
|---|---|
| t: | 0.2-6 mm |
| w: | 30-100 cm |
| I: | 50-300 cm |

9. Gemusterte Verbundmetallplatte nach Anspruch 7 oder 8, wobei das Muster ein Damaszenermuster ist.

10. Gemustertes Verbundmetall nach einem der Ansprüche 7 bis 9, wobei die mindestens zwei verschiedenen Metalle und/oder Metalllegierungen eines oder mehrere der folgenden Metalle umfassen: Ag, Al, Au, Cu, Cr, Fe, Mo, Nb, Ni, Pb, Pd, Pt, Sn, Ta, Ti, V, W und Zn.

11. Gemusterte Verbundmetallplatte nach einem der Ansprüche 7-10, wobei die mindestens zwei verschiedenen Metalle und/oder Metalllegierungen rostfreie Stähle sind, welche jeweils mindestens 11 % Cr, vorzugsweise mindestens 13 % Cr, umfassen, und wobei optional der Äquivalentkreisdurchmesser, ECD, von mindestens 95 Vol% jeglicher Karbid- und/oder Karbonitridteilchen ≤ 5 µm ist, wobei der ECD =2√A/π ist, wobei A die Oberfläche der Teilchen in dem untersuchten Abschnitt ist.

## Revendications

1. Procédé de production d'une plaque métallique composite dotée d'un motif, comprenant les étapes suivantes :
a) fourniture d'au moins deux poudres de métal et/ou d'alliage métallique différentes,
b) remplissage d'un récipient,
b1) avec les poudres en couches individuelles différentes, lesquelles couches de poudre individuelles comprennent au moins deux couches non parallèles et/ou couches non droites, ou
b2) préparation d'un corps tridimensionnel non plein de l'une des poudres, qui comprend au moins deux parties ou couches non parallèles et/ou parties ou couches non droites, insertion dudit corps dans le récipient et remplissage des cavités dans ledit et autour dudit corps complètement avec l'autre poudre,
c) scellage et évacuation du récipient,
d) soumission du récipient à un pressage isostatique à chaud afin de former un corps consolidé comprenant des couches de métal et/ou d'alliage métallique non parallèles et/ou non droites,
e) éventuellement soumission du corps consolidé à une déformation à chaud afin de former un corps intermédiaire ayant une épaisseur de 50 à 200 mm,
f) laminage à chaud du corps consolidé ou intermédiaire dans deux directions perpendiculaires afin de former une plaque,
éventuellement une ou plusieurs des étapes suivantes :
g) laminage à froid de la plaque laminée à chaud afin de former une plaque laminée à froid,
h) refendage de la plaque en deux parties ou plus, et
i) gravure de la plaque afin de révéler ou d'amplifier le motif.

2. Procédé selon la revendication 1, dans lequel le motif est un motif damasquiné.

3. Procédé selon la revendication 1 ou 2, dans lequel l'épaisseur t, la largeur w, et la longueur I de la plaque satisfont à au moins une des exigences t = 1 à 15 mm, w ≥ 50 mm et I ≥ w.

4. Procédé selon l'une quelconque des revendications précédentes, dans lequel les poudres de métal et/ou d'alliage métallique comprennent un ou plusieurs des métaux suivants : Ag, Al, Au, Be, Bi, Cu, Ce, Cr, Fe, Mo, Nb, Ni, Pb, Pd, Pt, Sn, Ta, Ti, V, W et Zn.

5. Procédé selon l'une quelconque des revendications précédentes, dans lequel les poudres sont des poudres d'acier inoxydable, comprenant chacune au moins 11 % de Cr, de préférence au moins 13 % de Cr.

6. Procédé selon l'une quelconque des revendications 1 et 2, dans lequel la plaque est refendue en deux parties ou plus afin de former des bandes, comprenant éventuellement une ou plusieurs des étapes suivantes : découpage des bandes en ébauches, utilisation des ébauches pour former au moins un couteau, et gravure du couteau.

7. Plaque métallique composite dotée d'un motif obtenue par le procédé de l'une quelconque des revendications 1 à 5, dans laquelle la plaque comprend au moins deux métaux et/ou alliages métalliques différents, dans laquelle l'épaisseur t, la largeur w et la longueur I de la plaque satisfont à au moins une des exigences t = 0,1 à 15 mm, w ≥ 190 mm et I ≥ w, dans laquelle le diamètre équivalent au cercle, ECD, d'au moins 95 % en volume de toutes les particules d'oxyde, est ≤ 10 µm et dans laquelle l'ECD = 2√A/π, où A est la surface des particules dans la section étudiée.

8. Plaque métallique composite dotée d'un motif selon la revendication 7, satisfaisant à au moins une des exigences suivantes :
t : 0,2 à 6 mm
w : 30 à 100 cm
I : 50 à 300 cm.

9. Plaque métallique composite dotée d'un motif selon la revendication 7 ou 8, dans laquelle le motif est un motif damasquiné.

10. Plaque métallique composite dotée d'un motif selon l'une quelconque des revendications 7 à 9, dans laquelle les au moins deux métaux et/ou alliages métalliques différents comprennent un ou plusieurs des métaux suivants : Ag, Al, Au, Cu, Cr, Fe, Mo, Nb, Ni, Pb, Pd, Pt, Sn, Ta, Ti, V, W et Zn.

11. Plaque métallique composite dotée d'un motif selon l'une quelconque des revendications 7 à 10, dans laquelle les au moins deux métaux et/ou alliages métalliques différents sont des aciers inoxydables, comprenant chacun au moins 11 % de Cr, de préférence au moins 13 % de Cr, et éventuellement dans laquelle le diamètre équivalent au cercle, ECD, d'au moins 95 % en volume de toutes les particules de carbure et/ou de carbonitrure, est ≤ 5 µm, dans laquelle l'ECD = 2√A/π, où A est la surface des particules dans la section étudiée.
